# FASCICULE DE BREVET EUROPEEN

(11) **EP 0 596 808 B1**
(45) Date de publication et mention de la délivrance du brevet: **28.02.1996**
(21) Numéro de dépôt: 93402720.2
(22) Date de dépôt: 05.11.1993
(51) Int. Cl.: B25B 5/08, B25B 5/12, B23K 37/04

(54) **Tête de bridage**
Spannkopf
Clamping head

(30) Priorité: 05.11.1992 FR 9213305
(43) Date de publication de la demande: 11.05.1994
(73) Titulaire: Breiter, Martin, F-75020 Paris (FR); Mifsud, Gilles, F-77163 Mortcerf (FR)
(72) Inventeur: Breiter, Martin, F-75020 Paris (FR)
(74) Mandataire: Chambon, Gérard

(56) Documents cités:
- EP-A- 0 370 914
- FR-A- 2 427 179
- FR-A- 2 630 953
- US-A- 3 347 542
- US-A- 3 482 830
- US-A- 4 396 183

## Description

L'invention concerne une tête de bridage pour maintenir des pièces mécaniques à usiner ou à préparer, notammant dans le domaine automobile il est connu d'utiliser des dispositifs de maintien ou de bridage dans les postes de soudage ou autres.

Ces dispositifs sont pourvus d'au moins une tête de bridage comportant généralement au moins un bras de serrage qui est monté pivotant entre au moins une position de serrage et une position de desserrage et qui est actionné en rotation par un système d'entraînement muni d'une pièce d'actionnement guidée en un mouvement alternatif, tandis que ladite pièce est reliée audit bras par un système articulé comportant au moins une biellette articulée par l'une de ses extrémités à au moins un levier d'actionnement pivotant et solidaire en rotation dudit bras de serrage.

C'est par exemple le cas dans des dispositifs décrits dans les brevets FR-2340798 et FR-2630953.

La pièce à maintenir peut alors être serrée entre le bras de serrage dont l'extrémité est aménagée en conséquence et une contrepièce.

Le brevet 2340798 propose une tête de bridage à blocage irréversible permettant d'assurer un maintien en cas de coupure accidentelle de la source d'énergie de commande.

Pour éviter toutefois certains risques de blocage intempestifs à l'ouverture, le brevet 2630953 propose de guider la tige du vérin de façon non rectiligne en position de serrage.

Un tel système présente en outre l'intérêt de pouvoir agir dans certaines limites sur la loi des efforts dans ladite position de serrage.

Il a aussi été imaginé, comme le rappelle le document EP-A-0370914, un dispositif du type précité dont l'autre extrémité de la biellette est articulée à un levier complémentaire, lui-même articulé à la pièce d'actionnement, l'axe d'articulation de la biellette avec ledit levier étant pourvu de galets destinés à venir au contact d'une rampe.

Cependant, ces dispositifs, à cause de leur système d'articulation en simple "genouillère" ou même avec le levier complémentaire précité, nécessitent une course importante du vérin et donc un encombrement qui peut être gênant.

Bien que d'une géométrie et d'un actionnement différents, le document US-A-3,347,542 (qui correspond au préambule de la revendication 1) décrit un dispositif dont l'embiellage est pourvu aussi d'un levier complémentaire qui est articulé à une biellette et une pièce d'actionnement, mais qui comporte en outre un moyen de guidage qui est disposé à distance de ses points d'articulation avec ladite biellette et ladite pièce d'actionnement et qui est destiné à coopérer avec un moyen de guidage fixe conjugué.

Tous ces dispositifs connus ne permettent une action que très limitée, voire impossible, sur la loi des mouvements et/ou des efforts.

Or, il est de plus en plus nécessaire de pouvoir imaginer des dispositifs capables de répondre à des lois spécifiques de mouvement et/ou d'effort de manière à moduler la vitesse de rotation du bras de serrage (par exemple avec accélération vers le milieu du mouvement) mais aussi permettre de moduler les efforts, par exemple en multipliant les forces en fin de course de serrage.

C'est pourquoi l'invention propose une tête de bridage tout à fait avantageuse, qui est peu encombrante grâce à une course de la pièce d'actionnement limitée et qui permet un contrôle des mouvements et des efforts au serrage et au desserrage.

Pour cela, la tête de bridage selon l'invention comporte au moins un bras de serrage et un système articulé du type mentionné à propos du dernier document cité, mais elle est remarquable en ce que le moyen de guidage fixe est réalisé sous la forme d'au moins une rainure curviligne de guidage ménagée dans la tête.

L'étude du dessin de la rainure de guidage va permettre de moduler à volonté les lois de mouvement et d'effort du bras de serrage. Avantageusement, la rainure curviligne présente sensiblement la forme générale d'un S.

De préférence, le moyen de guidage du basculeur est constitué par au moins un galet. Par exemple dans ce cas, bien que cela ne soit pas obligatoire, l'axe dudit galet n'est pas disposé sur la ligne géométrique qui joint les points d'articulation du basculeur avec, d'une part, la biellette et, d'autre part, la pièce d'actionnement.

Avantageusement, la pièce d'actionnement est guidée par au moins un galet dont elle est munie et au moins une rainure rectiligne de guidage ménagée dans la tête de guidage et de préférence le galet de la pièce d'actionnement est aménagé autour de l'axe d'articulation de ladite pièce avec le levier basculeur.

Pour des raisons de sécurité, l'invention propose un mode de réalisation qui est remarquable en ce qu'il comporte un système de blocage de position qui vient agir élastiquement sur le levier basculeur pour forcer celui-ci dans sa position de desserrage et dans sa position de serrage.

La sécurité au serrage en cas de coupure intempestive de la source d'énergie est compréhensive. L'invention va plus loin en proposant aussi une sécurité en position de desserrage car un simple changement de position intempestif du bras peut s'avérer dangereux, même si aucune pièce ne risque de tomber.

De préférence dans ce cas, le système de blocage comporte au moins un galet de pression guidé et sollicité par un moyen élastique à venir s'appuyer sur le levier basculeur dont la forme appropriée permet audit galet de forcer ledit basculeur vers chacune de ses positions respectivement de desserrage et de serrage.

Avantageusement, le moyen élastique qui sollicite le galet de pression est un ressort à lame muni d'un moyen de réglage et/ou de suppression de la tension.

Selon un mode de réalisation, les rainures de guidage sont ménagées par paire dans deux flasques de la tête de bridage disposés en regard l'un de l'autre, tandis que les galets correspondants sont aussi prévus par paire. Dans ce cas, sans que cela soit obligatoire, le levier d'actionnement peut être solidaire en rotation avec le bras de serrage par un arbre solidaire dudit levier et sur lequel est fixé le bras, tandis que ledit arbre est monté dans des paliers aménagés dans les flasques de la tête de bridage.

De même, la tête de bridage selon l'invention peut ne comporter qu'une seule biellette qui vient agir sur une paire de leviers d'actionnement, le levier basculeur peut-être constitué par deux plaques fixées entre elles, la pièce d'actionnement étant articulée entre lesdites plaques...

En outre, on comprend que la tête de bridage peut comporter plusieurs bras, par exemple fixés sur le même arbre.

Selon un mode de réalisation intéressant pourvu d'au moins une paire de bras de serrage et un seul système d'entraînement, on peut prévoir pour chaque bras de serrage un système articulé muni d'au moins un galet coopérant avec au moins une rainure curviligne de guidage, les systèmes étant positionnés symétriquement par rapport à un plan de manière telle que le système d'entraînement manoeuvre les bras de la paire en rotation inverse.

Les systèmes articulés ont donc un système d'actionnement commun muni éventuellement d'une pièce d'actionnement double.

On confectionne ainsi une sorte de pince au moyen d'une tête double.

L'invention sera bien comprise et d'autres particularités apparaîtront à la lecture de la description qui va suivre et qui se réfère aux dessins annexés dans lesquels:
- la figure 1 montre en perspective un dispositif de bridage muni d'une tête selon l'invention,
- la figure 2 est une vue arrière du dispositif de la figure 1,
- les figures 3 à 5 montrent le système articulé de la tête de bridage (l'un des flasques du corps étant retiré) dans trois positions respectivement de desserrage, intermédiaire et de serrage.

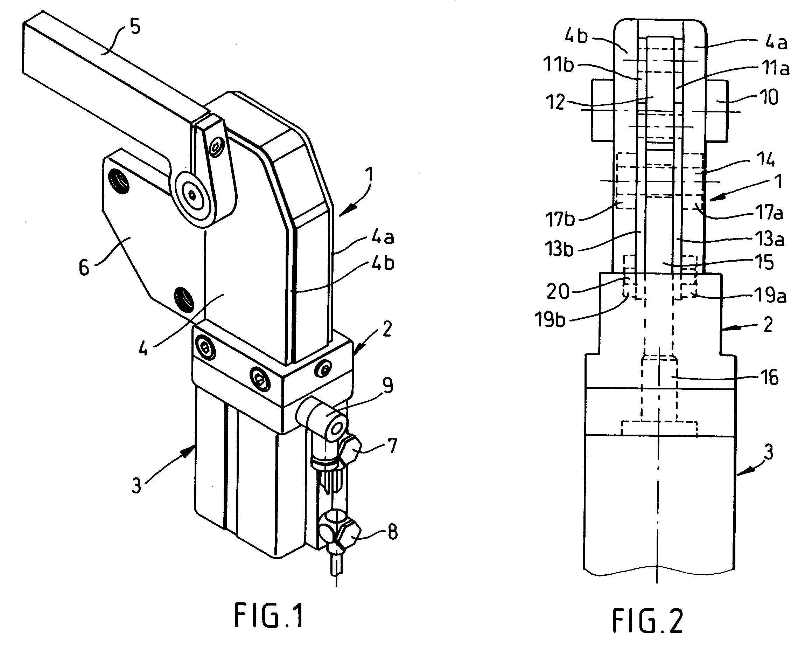

Le dispositif de bridage représenté sur les figures 1 et 2 comporte une tête de bridage 1, un boîtier de détection 2 de position et un système d'actionnement 3.

La tête de bridage 1 comporte un corps 4, un bras de serrage 5 monté pivotant dans ledit corps 4 (représenté en position de serrage sur la figure 1 et non représenté sur la figure 2) et dans cet exemple, une plaque de fixation 6 pour disposer le dispositif sur tout support approprié.

Le système d'actionnement 3 est ici pourvu d'un vérin dont il sera question ci-après, ledit vérin pouvant être pneumatique, hydraulique, mécanique, ou électrique, mais il pourrait s'agir de tout autre système (crémaillère, ...).

Dans cet exemple, il s'agit d'un vérin pneumatique à double effet dont on peut voir les raccords de connexion pneumatique 7 et 8 sur la figure 1.

Par ailleurs, la figure 1 montre aussi un connecteur électrique 9 sur le boîtier 2 de détection de position.

Comme le montrent plus particulièrement les figures 1 et 2, le corps 4 de la tête 1 est formé par deux flasques 4a, 4b.

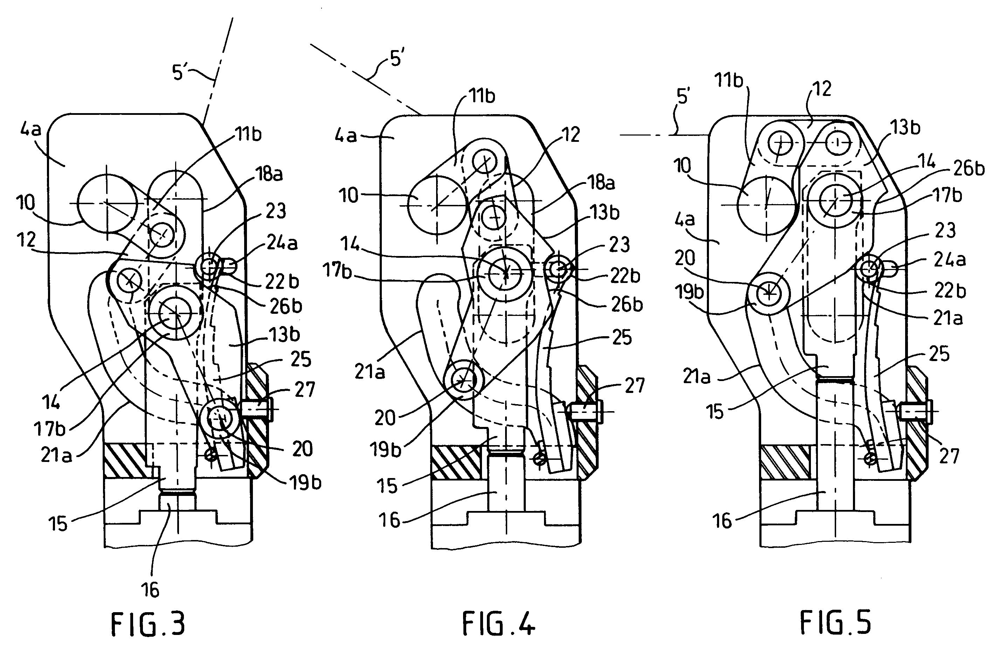

Les figures 3 à 5 montrent seulement l'un des flasques, ici le flasque 4a vu par l'intérieur.

Les flasques 4a et 4b forment un palier de rotation pour un arbre 10 solidaire en rotation du bras 5, par exemple au moyen d'un étrier de serrage, comme le montre la figure 1.

Entre les flasques 4a et 4b, est disposé un système articulé comportant une paire de leviers 11a, 11b (figures 2 à 5), solidaires en rotation avec l'arbre 10 et articulés à l'extrémité d'une biellette 12 dont l'autre extrémité est articulée à un levier basculeur formé de deux plaques symétriques 13a, 13b (figure 2). Toutefois, l'arbre 10 peut être remplacé par un axe fixe de la tête, le bras tournant autour dudit axe et étant alors solidaire en rotation des leviers 11a, 11b.

Le levier basculeur (13a,13b) est en outre articulé par un axe 14 disposé entre ses plaques constitutives 13a, 13b à un coulisseau 15 fixé à l'extrémité de la tige 16 du vérin d'actionnement mentionné ci-avant mais non représenté plus spécialement.

Sur l'axe 14 d'articulation du levier basculeur (13a,13b) avec le coulisseau 15 sont en outre montés rotatifs deux galets 17a, 17b destinés à venir rouler ou glisser dans des rainures rectilignes et symétriques telle que 18a (figures 3 à 5) ménagées à cet effet dans les flasques 4a, 4b (on comprend qu'une rainure non représentée correspondant à la rainure 18a est prévue dans le flasque 4b).

Les galets 17a, 17b et les rainures correspondantes telle que 18a ont pour effet de guider l'extrémité du coulisseau 15 en un mouvement rectiligne de va et vient, entraînant de même l'axe 14 d'articulation du levier basculeur (13a,13b).

Le levier basculeur (13a,13b) est en outre pourvu d'une autre paire de galets 19a, 19b montés sur un axe commun 20.

Les galets 19a, 19b sont destinés à rouler ou glisser dans des rainures curvilignes correspondantes de guidage telle que 21a (figures 3 à 5) ménagées sur les flasques 4a, 4b du corps 4 (on comprend aussi que, comme pour la rainure rectiligne précitée, l'autre rainure du flasque 4b n'est pas visible sur les dessins). Les galets 17a, 17b et 19a, 19b peuvent bien sûr être remplacés par des patins ou similaire, tandis que chaque paire de galets peut être remplacée de manière équivalente par un rouleau unique, à moins même que leur axe 14, 20 ne soit suffisant.

Comme le montrent en outre les figures 3 à 5, les rainures telle que 21a présentent ici une forme générale en S.

La forme du levier basculeur (13a,13b) et la disposition de ses points d'articulation (articulation avec le coulisseau, disposé ici dans cet exemple au sommet du triangle formé par lesdits points) de même que la forme des rainures curvilignes sont prévues pour assurer un basculement dudit levier basculeur en même temps que l'un de ses points (articulation avec le coulisseau) se déplace linéairement.

Sur les figures 3 à 5, on a schématisé en trait mixte 5' l'axe du bras de serrage 5, lesdites figures représentant le dispositif dans trois positions respectivement de desserrage (figure 3), c'est-à-dire inactive, intermédiaire (figure 4) et de serrage (figure 5).

La position de la figure 5 correspond donc sensiblement à la position de la figure 1.

A partir de la position de desserrage (ou encore dite d'ouverture) le bras fait ici sensiblement un angle d'environ 105° avec l'horizontale pour finir en position de serrage (ou encore dite de fermeture) pratiquement à l'horizontale.

En partant de la position de la figure 3 (position de desserrage) on constate que les galets 17a et 19a sont dans les positions extrêmes inférieures des rainures de guidage respectivement 18a et 21a, de même bien entendu que les galets correspondants 17b et 19b dans leurs rainures respectives, lesdits galets 17b et 19b étant en fait les seuls visibles sur lesdites figures 3 à 5.

Au contraire, dans la position de serrage de la figure 5, les galets précités sont en bout de course aux autres extrémités des rainures 18a et 21a.

Alors que le levier 11b (et son homologue) aura tourné d'environ 105° entre ses deux positions extrêmes (de même bien sûr que le bras de serrage 5), la biellette 12 et le levier basculeur (13a,13b) auront subi des mouvements plus compliqués comme on peut le constater grâce à la figure 4 intermédiaire.

En basculant, le levier (13a,13b) entraîne dans un mouvement équivalent son articulation avec la biellette 12.

Ainsi, on pourra en dessinant convenablement les rainures de guidage telle que 21a obtenir des mouvements et des formes adaptées à l'application désirée par exemple en imposant une vitesse accélérée puis décélérée respectivement au début et en fin de mouvement aussi bien au serrage qu'au desserrage, etc.

En vue d'assurer un blocage temporaire dans les positions représentées sur les figures 3 et 5, même en l'absence d'énergie l'invention propose un système qui utilise le levier basculeur (13a,13b).

Ce système de blocage comporte notamment une paire de galets de pression tel que le galet 22b sur les figures 3 à 5. Les galets tel que 22b sont montés sur un axe commun 23 dont les extrémités sont guidées dans des rainures rectilignes correspondantes telle que 24a ménagées aussi dans les flasques 4a, 4b.

Les rainures telle que 24a sont disposées sensiblement perpendiculairement aux rainures telle que 21a.

En outre, l'axe 23 est sollicité par un moyen élastique tel le ressort à lame 25 représenté qui sollicite les galets tel que 22b à venir s'appuyer sur le levier basculeur, un galet sur chaque plaque 13a, 13b dudit levier.

Le profil des plaques 13a, 13b du levier basculeur est étudié pour constituer de véritables cames.

En position de desserrage (figure 3), on peut voir que le galet 22b sollicite la plaque 13b du levier basculeur dans cette position en forçant ledit levier à tourner encore plus (galet 22b au-dessus de l'axe d'articulation 14).

On obtient un forçage identique dans l'autre position (figure 5), le levier basculeur étant alors sollicité en rotation inverse (galet 22b en dessous de l'axe 14).

Pour passer de la position de la figure 3 à la position de la figure 5, on peut voir les profils suivis par les galets et notamment le creux tel que 26b prévu sur les plaques du levier basculeur.

Afin de régler et/ou supprimer la tension du ressort 25, on a prévu une vis de réglage 27 qui vient appuyer sur ledit ressort. Ainsi si on veut débloquer le système manuellement, il suffit d'agir sur la tension du ressort en dévissant la vis 27.

De nombreuses modifications peuvent être apportées sans sortir du cadre des revendications, notamment en ce qui concerne les structures par paires, le moyen élastique de blocage, l'axe d'articulation 14 avec le coulisseau 15 qui sert aussi d'axe pour les galets 17a, 17b, la pièce et l'organe d'actionnement, etc.

De plus, comme déjà dit, une tête double permet de concevoir un système de pince avec un seul système d'entraînement 3 muni éventuellement d'un coulisseau 15 double. Pour cela, il suffit, par exemple, de prévoir deux systèmes articulés, tels que représentés sur les dessins, disposés l'un en face de l'autre ou dos à dos, pour avoir deux bras qui pivotent en sens inverse chacun autour d'un axe.

## Revendications

1. Tête de bridage comportant au moins un bras de serrage (5) qui est monté pivotant entre au moins une position de serrage et une position de desserrage et qui est actionné en rotation par un système d'entraînement (3) muni d'une pièce d'actionnement (15) guidée en un mouvement alternatif, tandis que ladite pièce (15) est reliée audit bras par un système articulé comportant au moins une biellette (12) articulée par l'une de ses extrémités à au moins un levier d'actionnement (11a,11b) pivotant et solidaire en rotation dudit bras de serrage (5), tandis que l'autre extrémité de la biellette (12) est articulée à un levier basculeur (13a,13b), lui-même articulé à ladite pièce d'actionnement (15), et qui comporte un moyen de guidage qui est disposé à distance de ses points d'articulation avec ladite biellette (12) et ladite pièce d'actionnement et qui est destiné à coopérer avec un moyen de guidage fixe conjugué, caractérisée en ce que le moyen de guidage fixe est réalisé sous la forme d'au moins une rainure curviligne (21a) de guidage ménagée dans la tête.

2. Tête de bridage selon la revendication 1, caractérisée en ce que la rainure curviligne (21a) présente sensiblement la forme générale d'un S.

3. Tête de bridage selon l'une des revendications 1 et 2, caractérisée en ce que le moyen de guidage du basculeur est constitué par au moins un galet (19a,19b).

4. Tête de bridage selon la revendication 3, caractérisée en ce que l'axe (20) dudit galet (19a,19b) n'est pas disposé sur la ligne géométrique qui joint les points d'articulation du basculeur avec, d'une part, la biellette (12) et, d'autre part, la pièce d'actionnement (15).

5. Tête de bridage selon l'une des revendications 1 à 4, caractérisée en ce que la pièce d'actionnement (15) est guidée par au moins un galet (17a,17b) dont elle est munie et au moins une rainure rectiligne (18a) de guidage ménagée dans la tête de guidage.

6. Tête de bridage selon la revendication 5, caractérisée en ce que le galet (17a,17b) de la pièce d'actionnement est aménagé autour de l'axe (14) d'articulation de ladite pièce avec le levier basculeur.

7. Tête de bridage selon l'une des revendications 1 à 6, caractérisée en ce qu'elle comporte un système de blocage de position qui vient agir élastiquement sur le levier basculeur (13a,13b) pour forcer celui-ci dans sa position de desserrage et dans sa position de serrage.

8. Tête de bridage selon la revendication 7, caractérisée en ce que le système de blocage comporte au moins un galet de pression (22b) guidé et sollicité par un moyen élastique à venir s'appuyer sur le levier basculeur dont la forme appropriée permet audit galet de forcer ledit basculeur vers chacune de ses positions respectivement de desserrage et de serrage.

9. Tête de bridage selon l'une des revendications 7 et 8, caractérisée en ce que le moyen élastique qui sollicite le galet de pression (22b) est un ressort à lame (25) muni d'un moyen (27) de réglage et/ou de suppression de la tension.

10. Tête de bridage selon l'une des revendications 1 à 9, caractérisée en ce les rainures de guidage (18a; 21a) sont ménagées par paire dans deux flasques (4a,4b) de la tête de bridage disposés en regard l'un de l'autre, tandis que les galets correspondants (17a,17b; 19a,19b) sont aussi prévus par paire.

11. Tête de bridage selon la revendication 10, caractérisée en ce que le levier d'actionnement (11a,11b) est solidaire en rotation avec le bras de serrage (5) par un arbre (10) solidaire dudit levier et sur lequel est fixé le bras, tandis que ledit arbre est monté dans des paliers aménagés dans les flasques (4a,4b) de la tête de bridage.

12. Tête de bridage selon l'une des revendications 1 à 11, caractérisée en ce qu'elle comporte une seule biellette (12) qui vient agir sur une paire de leviers d'actionnement (11a,11b).

13. Tête de bridage selon l'une des revendications 1 à 12, caractérisée en ce que le levier basculeur est constitué par deux plaques (13a,13b) fixées entre elles, la pièce d'actionnement (15) étant articulée entre lesdites plaques.

14. Tête de bridage à au moins une paire de bras de serrage (5) et un système d'entraînement (3) muni d'au moins une pièce d'actionnement (15), selon l'une des revendications 1 à 13, caractérisée en ce qu'elle comporte pour chaque bras un système articulé (12; 11a,11b; 13a, 13b) muni d'au moins un galet (19a,19b) coopérant avec au moins une rainure curviligne (21a) de guidage, les systèmes étant positionnés symétriquement par rapport à un plan de manière telle que le système d'entraînement manoeuvre les bras (5) de la paire en rotation inverse.

## Claims

1. Clamping head comprising at least one gripping arm (5) which is mounted pivotable between at least one gripping position and a releasing position and which is made to rotate by an entrainment system (3) provided with an operating part (15) guided in an alternating movement, while said part (15) is connected to said arm by an articulated system comprising at least one link (12) articulated by one of its ends to at least one pivoting operating lever (11a, 11b) locked in rotation to said gripping arm (5), while the other end of the link (12) is articulated to a rocker lever (13a, 13b), itself articulated to said operating part (15), and which comprises a guiding means which is disposed remote from its points of articulation with said link (12) and said operating part and which is designed to cooperate with an associated fixed guiding means, characterised in that the fixed guiding means is embodied in the form of at least one curvilinear guiding groove (21a) formed in the head.

2. Clamping head according to claim 1, characterised in that the curvilinear groove (21a) essentially exhibits the general shape of an S.

3. Clamping head according to one of claims 1 and 2, characterised in that the guiding means of the rocker is constituted by at least one roller (19a, 19b).

4. Clamping head according to claim 3, characterised in that the axis (20) of said roller (19a, 19b) is not disposed on the geometric line which joins the points of articulation of the rocker with firstly the link (12) and secondly the operating part (15).

5. Clamping head according to one of claims 1 to 4, characterised in that the operating part (15) is guided by at least one roller (17a, 17b) with which it is equipped, and at least one rectilinear guiding groove (18a) formed in the guiding [clamping] head.

6. Clamping head according to claim 5, characterised in that the roller (17a, 17b) of the operating part is arranged around the axis (14) of articulation of said part with the rocker lever.

7. Clamping head according to one of claims 1 to 6, characterised in that it comprises a position locking system which acts elastically on the rocker lever (13a, 13b) to force the latter into its releasing position and into its gripping position.

8. Clamping head according to claim 7, characterised in that the locking system comprises at least one pressure roller (22b) guided and drawn by an elastic means so that it bears against the rocker lever the appropriate shape of which enables said roller to force said rocker towards its releasing and its gripping position respectively.

9. Clamping head according to one of claims 7 and 8, characterised in that the elastic means which acts on the pressure roller (22b) is a leaf spring (25) provided with a means (27) for adjustment and/or elimination of the tension.

10. Clamping head according to one of claims 1 to 9, characterised in that the guiding grooves (18a; 21a) are formed in pairs in the two side pieces (4a, 4b) of the clamping head disposed facing one another, while the corresponding rollers (17a, 17b; 19a, 19b) are also provided in pairs.

11. Clamping head according to claim 10, characterised in that the operating lever (11a, 11b) is locked in rotation to the gripping arm (5) by a shaft (10) locked to said lever and on which the arm is fixed, while said shaft is mounted in bearings arranged in the side pieces (4a, 4b) of the clamping head.

12. Clamping head according to one of claims 1 to 11, characterised in that it comprises a single link (12) which acts on a pair of operating levers (11a, 11b).

13. Clamping head according to one of claims 1 to 12, characterised in that the rocker lever is constituted by two plates (13a, 13b) fixed between them, the operating part (15) being articulated between said plates.

14. Clamping head with at least one pair of gripping arms (5) and an entrainment system (3) provided with at least one operating part (15) according to one of claims 1 to 13, characterised in that for each arm it comprises an articulated system (12; 11a, 11b; 13a, 13b) provided with at least one roller (19a, 19b) cooperating with at least one curvilinear guiding groove (21a), the systems being positioned symmetrically in relation to a plane so that the entrainment system manoeuvres the arms (5) of the pair in opposite rotational directions.

## Patentansprüche

1. Spannkopf mit wenigstens einem Klemmarm (5), der schwenkbar zwischen wenigstens einer Klemmposition und einer Freigabeposition angebracht ist und durch ein Antriebssystem (3) in Rotation versetzt wird, das mit einem Antriebsglied (15) versehen ist, welches in einer Vor- und Rückbewegung geführt ist, wobei das Antriebsglied (15) mit dem Klemmarm durch ein Gelenksystem verbunden ist, das wenigstens einen Schwingarm (12) aufweist, der an einem seiner Enden gelenkig mit wenigstens einem schwenkbaren Antriebshebel (11a, 11b) verbunden ist, der drehfest mit dem Klemmarm (5) verbunden ist, und das andere Ende des Schwingarms (12) gelenkig mit einem Kipphebel (13a, 13b) verbunden ist, der gelenkig mit dem Antriebsglied (15) verbunden ist und ein Führungsmittel aufweist, das in einem Abstand von seinen Gelenkpunkten mit dem Schwingarm (12) und dem Antriebsglied angeordnet ist, und mit einem feststehenden zugeordneten Führungsmittel zusammenwirkt, dadurch gekennzeichnet, daß das feststehende Führungsmittel in Form wenigstens einer gekrümmten Führungsnut (21a) ausgebildet ist, die im Kopf angeordnet ist.

2. Spannkopf nach Anspruch 1, dadurch gekennzeichnet, daß die gekrümmte Nut (21a) im wesentlichen die allgemeine Form eines S darstellt.

3. Spannkopf nach einem der Ansprüche 1 und 2, dadurch gekennzeichnet, daß das Führungsmittel des Kipphebels durch wenigstens eine Rolle (19a, 19b) gebildet ist.

4. Spannkopf nach Anspruch 3, dadurch gekennzeichnet, daß die Achse (20) der Rolle (19a, 19b) nicht auf der geometrischen Linie, die die Gelenkpunkte des Kipphebels einerseits mit dem Schwingarm (12) und andererseits mit dem Antriebsglied (15) verbindet, angeordnet ist.

5. Spannkopf nach einem der Ansprüche 1 bis 4, dadurch gekennzeichnet, daß das Antriebsglied (15) durch wenigstens eine Rolle (17a, 17b), mit welcher es versehen ist, und wenigstens eine geradlinige Führungsnut (18a), die im Spannkopf angeordnet ist, geführt wird.

6. Spannnkopf nach Anspruch 5, dadurch gekennzeichnet, daß die Rolle (17a, 17b) des Antriebsgliedes um die Gelenkachse (14) dieses Gliedes mit dem Kipphebel herum angebracht ist.

7. Spannkopf nach einem der Ansprüche 1 bis 6, dadurch gekennzeichnet, daß er ein Posititions-Blockiersystem aufweist, das elastisch auf den Kipphebel (13a, 13b) zur Einwirkung kommt, um diesen in seine Freigabeposition und in seine Klemmposition zu zwingen.

8. Spannkopf nach Anspruch 7, dadurch gekennzeichnet, daß das Blockiersystem wenigstens eine Druckrolle (22b) aufweist, die durch ein elastisches Mittel so geführt und beaufschlagt ist, daß sie gegen den Kipphebel drückt, dessen zweckentsprechende Form es der Rolle ermöglicht, den Kipphebel jeweils in Richtung auf seine Freigabeposition bzw. seine Klemmposition zu zwingen.

9. Spannnkopf nach einem der Ansprüche 7 und 8, dadurch gekennzeichnet, daß das die Druckrolle (22b) beaufschlagende elastische Mittel eine Blattfeder (25) ist, die mit einem Mittel (27) zum Einstellen oder Aufheben der Spannung versehen ist.

10. Spannkopf nach einem der Ansprüche 1 bis 9, dadurch gekennzeichnet, daß die Führungsnuten (18a; 21a) paarweise in zwei Flanschen (4a, 4b) des Spannkopfes, die einander gegenüberliegen, angeordnet sind und die entsprechenden Rollen (17a, 17b; 19a, 19b) ebenfalls paarweise vorgesehen sind.

11. Spannkopf nach Anspruch 10, dadurch gekennzeichnet, daß der Antriebshebel (11a, 11b) drehfest mit dem Klemmarm (5) über eine mit dem Hebel fest verbundene Welle (10) verbunden ist, an welcher der Arm befestigt ist, und die Welle in Lagern gehalten ist, die in den Flanschen (4a, 4b) des Spannkopfes angeordnet sind.

12. Spannkopf nach einem der Ansprüche 1 bis 11, dadurch gekennzeichnet, daß er einen einzigen Schwingarm (12) aufweist, der auf ein Antriebshebel-Paar (11a, 11b) zur Einwirkung kommt.

13. Spannkopf nach einem der Ansprüche 1 bis 12, dadurch gekennzeichnet, daß der Kipphebel von zwei miteinander fest verbundenen Platten (13a, 13b) gebildet ist und das Antriebsglied (15) zwischen den Platten angelenkt ist.

14. Spannkopf mit wenigstens einem Paar Klemmarme (5) und einem Antriebssystem (3), das mit wenigstens einem Antriebsglied (15) versehen ist, nach einem der Ansprüche 1 bis 13, dadurch gekennzeichnet, daß er für jeden Arm ein Gelenksystem (12; 11a, 11b; 13a, 13b) aufweist, das mit wenigstens einer Rolle (19a, 19b) versehen ist, die mit wenigstens einer gekrümmten Führungsnut (21a) zusammenwirkt, wobei die Systeme zu einer Ebene symmetrisch angeordnet sind derart, daß das Antriebssystem die Arme (5) des Paares entgegengesetzt rotierend betätigt.
